# EUROPÄISCHE PATENTSCHRIFT

(11) **EP 1 124 168 B1**
(45) Veröffentlichungstag und Bekanntmachung des Hinweises auf die Patenterteilung: **10.07.2002**
(21) Anmeldenummer: 01102387.6
(22) Anmeldetag: 02.02.2001
(51) Int. Cl.: G05B 9/03, G05B 23/00

(54) **Elektronisches Steuersystem**
Electronic control system
Système de commande électronique

(30) Priorität: 11.02.2000 DE 10006206
(43) Veröffentlichungstag der Anmeldung: 16.08.2001
(73) Patentinhaber: DaimlerChrysler AG, 70567 Stuttgart (DE)
(72) Erfinder: Retter, Jochen, 73249 Wernau (DE); Rink, Anton, 76137 Karlsruhe (DE)

(56) Entgegenhaltungen:
- EP-A- 0 322 141
- DE-A- 3 600 092
- DE-A- 4 114 999
- DE-A- 19 743 463
- DE-C- 19 653 551

## Beschreibung

Die Erfindung betrifft ein elektronisches Steuersystem mit mehreren miteinander vernetzten bzw. kommunizierenden Steuereinheiten, wobei bei einer Übermittlung eines sicherheitsrelevanten Sendesignales von einer ersten Steuereinheit an eine zweite Steuereinheit Sicherungsmaßnahmen zur Vermeidung von Fehlreaktionen der zweiten Steuereinheit vorgesehen sind.

In modernen Kraftfahrzeugen sind aufwendige Steuersysteme vorhanden, die unter Umständen viele Steuereinheiten zur Betätigung von Untersystemen des Kraftfahrzeuges aufweisen.

Bei einer Fahrzeugantriebsregelung kommen verteilte Regelungssysteme zum Einsatz. Eine erste Steuereinheit berechnet in einer überlagerten Regelungsfunktion eine Sollgröße. Diese Sollgröße wird über einen Datenbus an eine dritte Steuereinheit gesendet. Die dritte Steuereinheit regelt mit einer unterlagerten Regelungsfunktion abhängig von der Sollgröße eine Einrichtung in der Weise, daß die Sollgröße optimal eingestellt wird. Die dritte Steuereinheit sendet ein Quittierungssignal über einen Datenbus an die erste Steuereinheit zurück.

Beispielsweise kann das Steuersystem eine elektronische Motorsteuerung sowie eine elektronische Getriebesteuerung umfassen, wobei die Getriebesteuerung bei einem Gangwechsel des Getriebes an die Motorsteuerung als Sendesignal einen Sollwert für das Drehmoment des Motors und gegebenenfalls weitere Sollwerte für weitere Parameter, z.B. die Motordrehzahl, übermittelt, um der Motorsteuerung eine an den Gangwechsel angepaßte Betriebsweise des Motors zu ermöglichen.

Derartige Steuersysteme müssen gegen Erzeugung und Übersendung von falschen Signalen gesichert werden, um die Gefahr schwerwiegender Fehlfunktionen zu vermeiden.

In diesem Zusammenhang ist es aus der WO 98/53374 einerseits bekannt, Signale redundant zu erzeugen und bei Abweichungen zwischen den redundant ermittelten Ergebnissen ein Fehlersignal zu generieren, welches dazu führt, daß die Signalverarbeitungseinheit abgeschaltet wird.

Andererseits zeigt die WO 98/53374 auch die Möglichkeit, das Steuersystem bei Erkennung von Fehlern auf einen Notbetrieb umzuschalten, so daß das Fahrzeug noch betriebsbereit bleibt, wenn auch gegebenenfalls mit vermindertem Konfort.

Aus der DE 4 114 999 ist es schließlich bekannt das von einer ersten an eine zweite Steuereinheit gesandte Signal und ein dazu komplementäres Signal zu vergleichen, bzw. bei Nichtübereinstimmung entsprechende Maßnahmen durchzuführen.

Aufgabe der Erfindung ist es nun, bei einem Steuersystem der eingangs angegebenen Art eine besonders hohe Betriebssicherheit zu gewährleisten.

Diese Aufgabe wird erfindungsgemäß dadurch gelöst, daß bei einer Übermittlung eines sicherheitsrelevanten Sendesignales von der ersten Steuereinheit an die zweite Steuereinheit vorgesehen ist, daß
- die erste Steuereinheit das Sendesignal und ein dazu komplementäres Sendesignal auf unterschiedlichen Wegen erzeugt und zusammen mit zwei Zusatzsignalen, die für die Wege signifikant sind, zu einem Speicher leitet,
- eine dritte Steuereinheit, die Sende- und Zusatzsignale aus dem Speicher ausliest und überprüft und bei Erkennung eines Fehlers die erste Steuereinheit abschaltet bzw. bei korrekten Signalen verschiedenartige Prüf- bzw. Sicherheitssignale erzeugt und an einen Speicher leitet,
- die erste Steuereinheit die Prüf- bzw. Sicherheitssignale aus dem letztgenannten Speicher ausliest und überprüft und bei Erkennung eines Fehlers sich selbst abschaltet bzw. bei korrekten Prüf- bzw. Sicherheitssignalen das Sendesignal sowie zumindest eine vorgegebene Auswahl der Prüf- bzw. Sicherheitssignale der zweiten Einheit zuleitet.

Die Erfindung beruht auf dem allgemeinen Gedanken, eine erste Steuereinheit vor Übermittlung eines sicherheitsrelevanten Signales an eine zweite Steuereinheit mit einer dritten Steuereinheit zur Überprüfung des jeweils zu sendenden Signales zusammenwirken zu lassen, wobei die dritte Steuereinheit zunächst die Funktion der ersten Steuereinheit und nachfolgend die erste Steuereinheit die Funktion der dritten Steuereinheit überprüfen muß, bevor das Sendesignal an die zweite Steuereinheit weitergeleitet werden kann. Bei dieser gegenseitigen Überprüfung arbeiten sowohl die erste als die dritte Steuereinheit unsymmetrisch redundant, wobei auch die Wege der redundanten Signalerzeugung überprüft werden.

Durch die Zwischenspeicherung der zwischen der ersten und der zweiten Steuereinheit ausgetauschten Signale in einem Speicher tritt zwischen Absendung eines Signales von der einen Steuereinheit und Empfang des Signales an der anderen Steuereinheit eine Verzögerung ein, durch die unerwünschte oder parasitäre Rückkopplungen zwischen diesen Steuereinheiten ausgeschlossen werden.

Gemäß einer besonders bevorzugten Ausführungsform der Erfindung ist des weiteren vorgesehen, daß die zweite Steuereinheit das ihr zugeleitete Sendesignal nur dann beachtet, wenn sie die des weiteren zugeleiteten Prüf- bzw. Sicherheitssignale als fehlerfrei erkannt hat.

Zusätzlich oder alternativ kann die Sicherheit des Systems noch dadurch erhöht werden, daß die zweite Sendeeinheit das erhaltene Sendesignal als Quittung an die erste Sendeeinheit zurückleitet.

Auf diese Weise wird auch die Funktion der zweiten Steuereinheit von einer anderen Steuereinheit zwangsläufig überprüft, so daß bei Fehlererkennung keine unerwünschten Steuerfunktionen ausgelöst werden bzw. auf eine Not- bzw. Ersatzbetriebsart des Steuersystems übergegangen werden kann.

Im übrigen kann vorgesehen sein, daß die erste Steuereinheit bei Übermittlung der Signale an die zweite Steuereinheit die zunächst in einem Pufferspeicher eingegebenen zu übermittelnden Signale zurückliest, so daß hier ein zusätzlicher Signalvergleich gegeben ist und bei Fehlererkennung wiederum eine Abschaltung der ersten Steuereinheit vorgenommen werden kann.

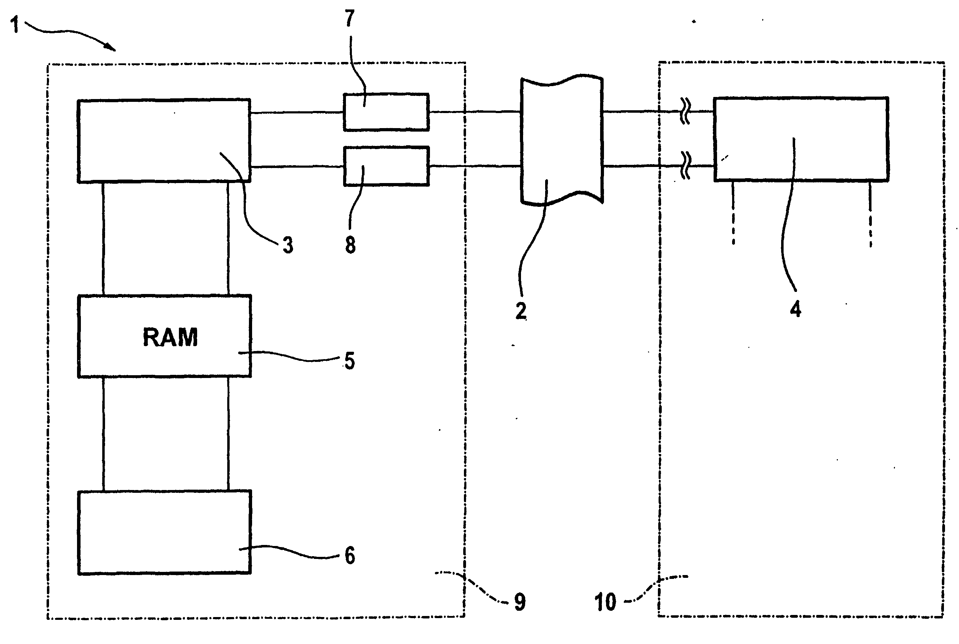

Im übrigen wird hinsichtlich bevorzugter Merkmale der Erfindung auf die Ansprüche sowie die nachfolgende Erläuterung der Zeichnung verwiesen, anhand der eine besonders bevorzugte Ausführungsform der Erfindung näher beschrieben wird.

Dabei zeigt die einzige Figur ein schematisiertes Blockschaltbild des erfindungsgemäßen elektronischen Steuersystems, welches vorzugsweise digital arbeitet.

Das in der Zeichnung dargestellte elektronische Steuersystem 1 besitzt einen Dacenbus 2, über den verschiedene Steuereinheiten miteinander vernetzt sind.

Im dargestellten Beispiel soll eine erste elektronische Steuereinheit 3, bei der es sich beispielsweise um eine automatische Getriebesteuerung in einem Kraftfahrzeug handeln kann, an eine zweite elektronische Steuereinheit 4, beispielsweise eine elektronische Motorsteuerung des Kraftfahrzeuges, sicherheitsrelevante Signale geben, welche beispielsweise den Sollwert eines bei einem Gangwechsel des Getriebes einzustellenden Motordrehmomentes repräsentieren.

In diesem Zusammenhang ist vorgesehen, daß die erste Steuereinheit 3 zunächst ein entsprechendes Sollwertsignal S sowie ein dazu, beispielsweise bitweise, komplementäres Sollwertsignal S* erzeugt und einem Speicher 5 zuführt. Das Sollwertsignal S sowie das komplementäre Sollwertsignal S* sollen mittels unterschiedlicher Module der Hardware oder Software der ersten Steuereinheit 3 erzeugt werden, d.h. auf unterschiedlichen Wegen, wobei des weiteren vorgesehen ist, daß jeweils ein den benutzten Weg anzeigendes Zusatzsignal Z bzw. Z* erzeugt wird. Diese Zusatzsignale werden ebenfalls dem Speicher 5 zugeführt.

Eine mit der ersten Steuereinheit 3 kombinierte dritte elektronische Steuereinheit 6 liest daraufhin die vorgenannten Signale S,S*,Z und Z* aus dem Speicher 5 aus, um verschiedene Prüfoperationen durchzuführen.

Einerseits kann die Komplementarität der Signale S und S* überprüft werden, beispielsweise dadurch, daß diese Signale miteinander bitweise addiert werden. Wenn dann die bitweise Addition immer auf NULL führt, ist die vorgenannte bitweise Komplementarität gegeben.

Des weiteren kann der Wertebereich der Signale S und S* überprüft werden, d.h. es wird abgefragt, ob die Signale in einem zulässigen und/oder plausiblen Bereich liegen.

Darüber hinaus können die Zusatzsignale Z und Z* auf Plausibilität überprüft werden. Beispielsweise kann vorgesehen sein, daß die zur Erzeugung der Signale S und S* in der ersten Steuereinheit 3 benutzten Wege nach vorgegebenen Zeitintervallen verändert werden müssen. Damit kann die dritte Steuereinheit 6 die Zulässigkeit der jeweils benutzten Wege anhand der Signale Z und Z* überprüfen.

Sollte die dritte Steuereinheit 6 einen Fehler bei den Signalen S,S*,Z und/oder Z* feststellen, wird die erste Steuereinheit 3 automatisch abgeschaltet.

Ergibt die Überprüfung, daß die Signale S,S*,Z und Z* fehlerfrei sind, kann die dritte Steuereinheit 6 zu den digitalen Signalen S und S* jeweils ein Paritätssignal P bzw. P* errechnen, welches wiedergibt, wie oft die digitalen Signale S und S* eine digitale EINS enthalten. Diese Paritätssignale werden auf unterschiedlichen Plätzen des Speichers 5 abgelegt.

Zusätzlich kann die dritte Steuereinheit 6 sogenannte Toggelbits T und T* erzeugen, die zueinander in vorgebbarer Weise komplementär sein können. Diese Toggelbits werden in regelmäßigen Zeitintervallen umgeschaltet, beispielsweise jeweils nach einer vorgegebenen Anzahl von Impulsen eines zentralen Taktgebers (nicht dargestellt) des Steuersystems 1. Diese Taktgeberimpulse können den Steuereinheiten über gesonderte Signalleitungen (nicht dargestellt) zugeleitet werden.

Auch die Toggelbits T und T* werden im Speicher 5 an unterschiedlichen Plätzen aufgenommen.

Nunmehr liest die erste Steuereinheit 3 die Paritätssignale P und P* sowie die Toggelbits T und T* aus dem Speicher 5 aus und führt verschiedene Sicherheitsüberprüfungen, beispielsweise Additionstest und Plausibilitätsprüfungen, durch.

Sollte ein Fehler festgestellt werden, schaltet sich die erste Steuereinheit 3 ab.

Falls die erste Steuereinheit 3 die vorgenannten Signale als fehlerfrei erkennt, leitet sie das Sollwertsignal S, das Paritätssignal P und das Toggelbit T an einen Pufferspeicher 7 weiter, der als Datenbus-Sendeeinheit wirkt und die vorgenannten Signale auf den Datenbus 2 legt.

Damit können die vorgenannten Signale S,P und T von der zweiten Steuereinheit 4 empfangen werden.

Die zweite Steuereinheit 4 beachtet das Sollwertsignal S nur dann, wenn das übermittelte Paritätssignal P die Parität des Signales S richtig wiedergibt und auch das Toggelbit T vorhanden bzw. plausibel ist.

Sollten diese Bedingungen nicht vollständig erfüllt wird, wird das Sollwertsignale S von der zweiten Steuereinheit 4 nicht akzeptiert.

Parallel zur Übermittlung der Signale S,P und T an die zweite Steuereinheit 4 werden diese Signale vom Datenbus 2 auch einem weiteren Pufferspeicher 8 zugeführt, welcher als Datenbus-Empfangseinheit arbeitet und die empfangenen Signale an die erste Steuereinheit 3 zurückleitet.

Auf diese Weise kann die erste Steuereinheit 3 die Übereinstimmung der von ihr gesendeten Signale mit über den Datenbus 2 unmittelbar zurückgeleiteten Signalen überprüfen.

Sollte hier eine Differenz auftreten, schaltet sich die erste Steuereinheit 3 ab.

Des weiteren kann die zweite Steuereinheit 4 nach Empfang der Signale S,P und T ein Quittierungssignal mit von den vorgenannten Signalen abhängiger Struktur an die erste Steuereinheit 3 zurücksenden. Als Quittierungssignal kann z.B. das empfangene Signal S gesendet werden. Sollte die erste Steuereinheit 3 das Quittierungssignal als fehlerhaft, d.h. als nicht zu den Signalen S,P und T passend, erkennen, ist dies gleichbedeutend damit, daß ein Kommunikationsfehler vorliegt.

In diesem Falle kann das Steuersystem gegebenenfalls auf einen Notbetrieb umgeschaltet werden.

Nach einer gegebenenfalls erfolgten automatischen Abschaltung der Steuereinheit 3 bzw. einer Umschaltung auf den Notbetrieb kann das Steuersystem 1 im Rahmen von Servicemaßnahmen wieder auf Normalbetrieb zurückgesetzt werden.

Die Elemente 3 und 5 bis 8 können als Teile oder Bereiche eines gesonderten Prozessors 9 ausgebildet oder programmiert sein. Insbesondere können die Steuereinheiten 3 und 6 auch in einem einzigen Steuergerät als unterschiedliche Software-Module realisiert werden.

Die zweite Steuereinheit 4 kann als Teil eines ähnlichen Prozessors 10 ausgebildet sein.

Der Datenbus 2 kann als sogenannter CAN-Bus vorgesehen sein.

Der Speicher 5 ist vorzugsweise ein RAM.

Das oben beschriebene Steuersystem arbeitet vorzugsweise digital.

Zusammenfassend ist festzustellen, daß mit der Erfindung eine Logik zur Überwachung von Sollgrößen in verteilten Regelungssystemen geschaffen wird, wobei die Sollgrößen prinzipiell unabhängig von der Applikation überprüft werden können.

## Patentansprüche

1. Elektronisches Steuersystem (1) mit mehreren miteinander vernetzten bzw. kommunizierenden Steuereinheiten (3,4,6), wobei bei einer Übermittlung eines sicherheitsrelevanten Sendesignales (S) von einer ersten Steuereinheit (3) an eine zweite Steuereinheit (4) vorgesehen ist, daß
- die erste Steuereinheit (3) das Sendesignal (S) und ein dazu komplementäres Sendesignal (S*) auf unterschiedlichen Wegen erzeugt und zusammen mit zwei Zusatzsignalen (Z,Z*), die für die Wege signifikant sind, an einen Speicher (5) leitet,
- eine dritte Steuereinheit (6) die Sende- und Zusatzsignale aus dem Speicher (5) ausliest und überprüft und bei Erkennung eines Fehlers die erste Steuereinheit (3) abschaltet bzw. bei korrekten Signalen verschiedenartige Prüf- bzw. Sicherheitssignale (P,P*,T,T*) erzeugt und an einen Speicher (5) leitet,
- die erste Steuereinheit (3) die Prüf- bzw. Sicherheitssignale aus dem letztgenannten Speicher (5) ausliest und überprüft und bei Erkennung eines Fehlers abschaltet bzw. bei korrekten Prüf- bzw. Sicherheitssignalen das Sendesignal (S) sowie zumindest eine vorgegebene Auswahl der Prüf- bzw. Sicherheitssignale (P,T) der zweiten Steuereinheit (4) zuleitet.

2. Steuersysstem nach Anspruch 1,
**dadurch gekennzeichnet,**
**daß** die zweite Steuereinheit (4) die gesendete Auswahl der Prüf- bzw. Sicherheitssignale (S,T) prüft und bei Erkennung eines Fehlers das Sendesignal (S) unbeachtet läßt.

3. Steuersystem nach Anspruch 1 oder 2,
**dadurch gekennzeichnet,**
**daß** die zweite Steuereinheit (4) bei korrekten Prüf- bzw. Sicherheitssignalen (P,T) das Sendesignal (S) verarbeitet bzw. befolgt.

4. Steuersystem nach einem der Ansprüche 1 bis 3,
**dadurch gekennzeichnet,**
**daß** die zweite Steuereinheit (4) das empfangene Sendesignal (S) oder ein damit korreliertes Quittungssignal an die erste Steuereinheit (3) zurückleitet, welche das zugeleitete Signal prüft und das Steuersystem (1) bei Erkennung eines Fehlers auf eine Not- bzw. Ersatzbetriebsart umschaltet bzw. bei korrektem Signal weiterarbeiten läßt.

5. Steuersystem nach einem der Ansprüche 1 bis 4,
**dadurch gekennzeichnet,**
**daß** die erste Steuereinheit (3) bei korrekten Prüf- bzw. Sicherheitssignalen (P,P*,T,T*) das Sendesignal (S) sowie die Auswahl der Prüf- bzw. Sicherheitssignale (P,T) zur Weiterleitung an die zweite Steuereinheit (4) einem Datenbussender (7) zuführt, welcher die vorgenannten Signale an die zweite Steuereinheit (4) und an die erste Steuereinheit (3) weiter- bzw. zurücksendet, und daß die erste Steuereinheit (3) die gesendeten sowie die zurückgesendeten Signale vergleicht und sich bei Signalabweichungen abschaltet.

6. Steuersystem nach einem der Ansprüche 1 bis 5,
**dadurch gekennzeichnet,**
**daß** das Sendesignal (S) und das komplementäre Sendesignal (S*) zueinander bitweise komplementär sind.

## Claims

1. Electronic control system (1) with several control units (3, 4, 6) linked or communicating with each other wherein upon transmission of an emission signal (S) relating to security from a first control unit (3) to a second control unit (4) it is provided that
- the first control unit (3) produces the emission signal (S) and an emission signal (S*) which is complementary thereto on different paths and together with two additional signals (Z, Z*) which are significant for the paths passes them to a storage device (5),
- a third control unit (6) reads and checks the emission and additional signals from the storage device (5) and upon recognising an error switches off the first control unit (3) or in the event of correct signals produces various verification and security signals (P, P*, T, T*) and forwards them to a storage device (5),
- the first control unit (3) reads and checks the verification and security signals from the last-named storage device (5) and upon recognising an error switches off or in the event of correct verification and security signals forwards the emission signal (S) as well as at least a given selection of the verification and security signals (P, T) to the second control unit (4).

2. Control system according to claim 1
**characterised in that**
the second control unit (4) checks the selection of the verification arid security signals (S, T) that have been sent and upon recognising an error takes no notice of the emission signal (S).

3. Control system according to claim 1 or 2
**characterised in that**
the second control unit (4) processes or complies with the emission signal (S) in the event of correct verification and security signals (P, T).

4. Control system according to one of the claims 1 to 3
**characterised in that**
the second control unit (4) forwards the emission signal (S) that has been received or an acknowledgement signal correlated with the same back to the first control unit (3) which checks the signal forwarded and upon recognising an error switches the control system (1) over to emergency or stand-by operation or in the event of a correct signal allows it to continue working.

5. Control system according to one of the claims 1 to 4
**characterised in that**
in the event of correct verification and security signals (P, P*, T, T*) the first control unit (3) feeds the emission signal (S) as well as the selection of the verification and security signals (P, T) for passing on to the second control unit (4) to a data bus sender (7) which sends on or sends back the aforesaid signals to the second control unit (4) and to the first control unit (3), and that the first control unit (3) compares the sent and the sent back signals and switches off in the event of signal deviations.

6. Control system according to one of the claims 1 to 5
**characterised in that**
the emission signal (S) and the complementary emission signal (S*) are complementary to each other in terms of bits.

## Revendications

1. Système de commande électronique comportant plusieurs unités de commande (3, 4, 6) maillées ou communiquant entre elles, dans lequel lors de la transmission d'un signal d'émission (S) important du point de vue sécurité, par une première unité de commande (3) à une seconde unité de commande (4), il est prévu que :
◆ la première unité de commande (3) produit un signal d'émission (S) et un signal d'émission complémentaire (S*) sur des trajets différents et l'envoie conjointement avec deux signaux supplémentaires (Z, Z*), qui sont importants pour les trajets, à une mémoire (5),
◆ une troisième unité de commande (6) lit les signaux d'émission et les signaux supplémentaires dans la mémoire (5) et les contrôle, dans le cas de l'identification d'une erreur, débranche la première unité de commande (3) ou, dans le cas de signaux corrects, produit des signaux de contrainte et de sécurité (P, P*, T, T*) de différents types et les envoie à une mémoire (5),
◆ la première unité de commande (3) lit les signaux de contrôle et de sécurité dans la mémoire (5) indiquée ne dernier lieu et les contrôle et, dans le cas de l'identification d'un défaut, interrompt ou, dans le cas de signaux corrects de contrôle et de sécurité, transmet le signal d'émission (S) ainsi qu'au moins une sélection prédéterminée des signaux de contrôle et de sécurité (P, T) à la seconde unité de commande (4).

2. Système de commande selon la revendication 1, **caractérisé en ce que** la seconde unité de commande (4) contrôle la sélection émise des signaux de contrôle et de sécurité (S, T) et, dans le cas de l'identification d'un défaut, ne prend pas en compte le signal d'émission (S).

3. Système de commande selon la revendication 1 ou 2, **caractérisé en ce que** dans le cas de signaux de contrôle ou de sécurité (P, T) corrects, la seconde unité de commande (4) traite ou suit le signal d'émission (S).

4. Système de commande selon l'une des revendications 1 à 3, **caractérisé en ce que** la seconde unité de commande (4) renvoie le signal d'émission reçu (S) ou un signal d'accusé de réception, qui y est corrélé, à la première unité de commande (3), qui contrôle le signal envoyé et, dans le cas de l'identification d'une erreur, commute le système de commande (1) sur un type de fonctionnement d'urgence ou un type de fonctionnement de remplacement ou, dans le cas où le signal est correct, laisse le signal de commande poursuivre le traitement.

5. Système de commande selon l'une des revendications 1 à 4, **caractérisé en ce que** dans le cas de signaux de contrôle ou de sécurité (P, P*, T, T*) corrects, la première unité de commande (3) envoie le signal d'émission (S) ainsi que la sélection des signaux de contrôle de sécurité (P, T), pour leur retransmission à la seconde unité de commande (4), à un émetteur de bus de données (7), qui transmet ou renvoie les signaux indiqués précédemment à la seconde unité de commande (4) et à la première unité de commande (3), et que la première unité de commande (3) compare les signaux émis ainsi que les signaux renvoyés et se débranche dans le cas d'écarts entre les signaux.

6. Système de commande selon l'une des revendications 1 à 5, **caractérisé en ce que** le signal d'émission (S) et le signal d'émission complémentaire (S*) sont complémentaires l'un de l'autre, bit-à-bit.
